(19) Europäisches Patentamt
European Patent Office
Office européen des brevets

(11) **EP 3 899 605 B1**

(12) **FASCICULE DE BREVET EUROPEEN**

(45) Date de publication et mention
de la délivrance du brevet:
**27.03.2024  Bulletin 2024/13**

(21) Numéro de dépôt: **19839337.3**

(22) Date de dépôt: **20.12.2019**

(51) Classification Internationale des Brevets (IPC):
**B42D 25/29** (2014.01)   **B42D 25/373** (2014.01)
**B42D 25/425** (2014.01)   **B42D 25/44** (2014.01)
**G02B 5/09** (2006.01)   **B41M 3/14** (2006.01)
**B42D 25/324** (2014.01)   **B42D 25/328** (2014.01)
**G02B 5/18** (2006.01)

(52) Classification Coopérative des Brevets (CPC):
**G02B 5/09; B41M 3/148; B42D 25/29;**
**B42D 25/324; B42D 25/328; B42D 25/373;**
**B42D 25/425; B42D 25/44;** G02B 5/1842

(86) Numéro de dépôt international:
**PCT/EP2019/086728**

(87) Numéro de publication internationale:
**WO 2020/128000 (25.06.2020 Gazette 2020/26)**

(54) **DISPOSITIF D'AFFICHAGE D'UNE OU PLUSIEURS IMAGE(S)TRANSITOIRE(S) ANIMEE(S) A PARTIR DE MICROSTRUCTURES TRIDIMENSIONNELLES ET SES UTILISATIONS**

VORRICHTUNG ZUR ANZEIGE EINES ODER MEHRERER TRANSITORISCHER BILDER AUS DREIDIMENSIONALEN MIKROSTRUKTUREN UND VERWENDUNGEN SOLCH EINER VORRICHTUNG

DEVICE FOR DISPLAYING ONE OR MORE TRANSITORY IMAGES FROM THREE-DIMENSIONAL MICROSTRUCTURES AND USES OF SUCH A DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **21.12.2018  PCT/EP2018/086770**

(43) Date de publication de la demande:
**27.10.2021  Bulletin 2021/43**

(73) Titulaire: **Karmic Sàrl**
**1020 Renens (CH)**

(72) Inventeur: **LEUNG KI, Yit-Shun**
**1020 Renens (CH)**

(74) Mandataire: **Frommhold, Joachim**
**Weinmann Zimmerli AG**
**Apollostrasse 2**
**Postfach 1021**
**8032 Zürich (CH)**

(56) Documents cités:
**WO-A1-2016/177470     DE-A1-102010 047 250**

**Description**

**Domaine technique**

La présente invention se rapporte au domaine de la sécurisation d'objets, et plus particulièrement aux éléments de sécurité dits de « niveau 1 », pour lesquels le principal outil d'authentification est l'œil nu et aptes à être apposés ou intégrés sur des objets à sécuriser.

Plus particulièrement, la présente invention concerne un dispositif comportant un substrat dont une surface ou portion de surface est structurée par des sous-ensembles d'éléments microscopiques de reliefs pour afficher de manière dynamique une image transitoire par réflexion spéculaire de faisceaux de lumière incidents sur lesdits sous-ensembles.

L'invention trouvera une application particulière, mais toutefois non exclusive, dans la sécurisation de documents comme les cartes d'identité ou les documents officiels mais aussi la sécurisation des billets de banque.

**Etat de la technique**

Les éléments de sécurité anti-copie de niveau 1 (ci-après « éléments d'authentification visuels ») sont essentiels pour la sécurisation des documents de valeur. Les nombreuses solutions existantes peuvent être classées en deux larges catégories :

- les éléments à base de pigments ou de colorants ayant des propriétés optiquement variables et généralement appliqués par impression tels que décrit dans US 5 059 245, et

- les éléments de sécurité basés sur des éléments de relief tels que décrits dans les documents WO1993000224, WO 2015/150052, EP1966769 et DE102010047250.

Parmi les éléments d'authentification visuels à base d'éléments de relief, on distingue les éléments diffractifs, tels que décrits dans WO1993000224, qui sont caractérisés par une forte irisation dépendante de l'angle de vue, et les éléments non-diffractifs, tels que décrits dans EP1966769 et DE102010047250, qui sont quant à eux caractérisés par des propriétés de variabilité optique obtenues par réflexion ou par réfraction de lumière.

Par rapport aux éléments diffractifs, les éléments utilisant la réfraction ou la réflexion de la lumière présentent deux avantages. En premier lieu, un élément non-diffractif n'est pas irisant. L'irisation est certes optiquement variable, mais donne lieu à des éléments visuels qui sont difficilement différentiables entre eux. Ceci n'est pas le cas pour les éléments non-diffractifs où l'absence d'irisation concentre l'attention de l'observateur sur le visuel affiché. Le deuxième avantage est que les équipements nécessaires à la réalisation d'éléments non-diffractifs sont spécialisés et actuellement peu répandus par rapport à ceux nécessaires à la production d'éléments diffractifs. Pour illustrer cette ubiquité de moyens, le site internet suivant : http://smartii.org/downloads/hologram-kit-your-own-hologram-lab-in-a-box/ propose un "kit" de réalisation de structures diffractives pour un prix modique.

Enfin, il convient de noter que les structures diffractives sont très sensibles aux contaminations et ne peuvent être générées initialement que sur une surface relativement petite dédiée à cette fin (opération ci-après appelée « origination »). De surcroît, les structures diffractives sont rapidement « bouchées », par la poussière ambiante, par l'environnement de stockage (p.ex. portefeuille) ou encore par la simple manipulation du substrat porteur à tel point qu'elles deviennent invisibles après quelques mois d'utilisation. Il en résulte que pour toute utilisation à long terme d'un tel élément sur un document de sécurité (p.ex. billet de banque, carte d'identité ou passeport), le relief diffractif composant l'élément doit impérativement être protégé. Cette protection nécessite un complexage de l'élément de sécurité passant par le transfert par galvanoplastie de la structure sur un outil en nickel appelé « shim », utilisé pour reproduire la structure diffractive dans une résine qui sera ensuite intégrée au sein d'une bande multicouches métallisée, également dénommée communément « foil ». Ce besoin de protection de l'élément de sécurité diffractif de base pour lui conférer une durabilité idoine d'utilisation renchérit considérablement la mise en oeuvre de tels éléments de sécurité diffractifs, et en limite de manière inhérente l'exploitation.

Les solutions d'éléments de sécurité par authentification visuelle caractérisés par des propriétés de variabilité optique obtenues par réflexion ou par réfraction sont cependant en pratique très peu nombreuses. Des exemples sont décrits dans EP1966769 A1 etDE102010047250. Ces éléments de sécurité non-diffractifs sont caractérisés par des éléments de relief en forme de cale dont une base s'étend dans un plan du support sur lequel elle sont formée et une hauteur s'étend hors dudit plan en projection sensiblement perpendiculaire à celui-ci, définissant ainsi des plans inclinés de réflexion/réfraction dont la variabilité optique est assurée en modifiant judicieusement l'angle hors-plan (angle "alpha" dans DE102010047250) de chaque élément de relief par rapport à son voisin.

Un inconvénient majeur des éléments de relief en forme de cale de EP1966769 et DE102010047250 tient dans la grande difficulté à maîtriser l'angle hors-plan du plan incliné de réflexion/réfraction de chaque cale, dont les dimensions dans le plan, donc des côtés de base de chaque cale, sont de l'ordre de 30 $\mu$m $\times$ 30 $\mu$m. Ce besoin de précision hors-plan n'est possible aujourd'hui que sur des surfaces typiquement inférieures à 100 mm x 100 mm. Par conséquent l'élément de sécurité décrit par l'art antérieur cité requiert forcément de passer par un transfert sur shim en nickel (Ni) au même titre que les éléments diffractifs décrits précédemment. En d'autres termes, il ne diffère d'un élément diffractif que par le type de phénomène optique utilisée pour induire une variabilité optique et reste sensiblement identique quant aux modalités de mise en oeuvre.

Un autre inconvénient majeur des éléments de relief en forme de cale de EP1966769 et DE102010047250 réside dans le fait que la hauteur des éléments de relief hors-plan n'est pas uniforme sur toute l'image. En effet, l'œil est très sensible aux différences de gabarit entre éléments de microrelief. Ainsi, même une seule cale de hauteur hors plan différente de toutes les autres sur une même image sera visible à l'œil nu et sera interprétée comme un « défaut » par l'observateur. Dans le plan, les éléments doivent tous avoir le même gabarit et il en découle que pour parvenir à des cales caractérisées par des angles hors-plan différents, c'est la hauteur ou profondeur de chaque élément qui doit varier. La non-uniformité de hauteur rend délicatetoute reproduction de l'élément d'authentification par des techniques d'impression telle que la taille douce ou la rotogravure où l'encre est étalée sur le substrat à imprimer de manière totalement uniforme.

Enfin, un dernier inconvénient des éléments de sécurité comportant des éléments de relief en forme de cale est que dans la pratique les effets visuels produits sont flous par rapport à ce qui est souhaité. En effet, l'homme du métier sait qu'actuellement, aux échelles de hauteur de relief désirées, c'est-à-dire de l'ordre de 2 - 5 $\mu$m, les techniques disponibles pour générer un élément d'authentification dans un délai de temps raisonnable sont très limitées.

Une technique utilisable serait par exemple la photolithographie par niveau de gris (en anglais : « Grayscale Lithography »). Selon cette méthode, une résine photosensible est étalée sur une plaque, elle est ensuite exposée par des tirs ponctuels selon une grille régulière d'un laser UV dont l'intensité peut être variée de tir en tir. Après développement de la plaque, la profondeur à chaque point de tir est essentiellement proportionnelle à l'intensité du faisceau laser programmée à ce même point. Une première source d'imprécision vient de cette discrétisation de la hauteur selon une grille de points dont l'espacement minimal est limité par la longueur d'onde du laser. Pour le rayonnement UV (365 nm) auquel la résine photosensible est sensible par exemple c'est au mieux de 0.6 $\mu$m x 0.6 $\mu$m. Les données mêmes transmises à la machine sont donc imprécises dû à cet effet « d'échantillonnage ». Une cale présentant une facette lisse ou plan incliné de réflexion/réfraction est possible en combinant une défocalisation du laser avec un protocole de développement propre à la structure souhaitée. En contrepartie, il sera difficile de distinguer de manière fiable deux angles hors-plan de deux cales proches. De surcroît les jonctions de relief doivent impérativement être lissées afin de permettre le transfert par galvanoplastie. Il en résulte que l'élément d'authentification produit selon cette méthode sera flou.

DE 102010047250 A1 se réfère à un dispositif de sécurité et à son procédé de fabrication. Le dispositif de sécurité renferme un support avec des parties de surface réfléchissantes et une variété de pixels. Chaque pixel présente au moins une facette réfléchissante avec une orientation spécifique et une variation coïncidente.

Le document WO 2016177470 A1 divulgue un dispositif de sécurité optiquement variable similaire. Le dispositif comprend un mobile, qui présente un affichage courbe en fonction de l'angle de vue.

Il existe donc un grand besoin pour des éléments d'authentification visuelle plus différenciables que les éléments diffractifs et plus souple dans la mise en oeuvre que les éléments non-diffractifs existants connus de l'art antérieur.

Ceci se traduit techniquement par le besoin d'une plus grande précision d'affichage des visuels souhaités, par une compatibilité élargie des microreliefs composant l'élément avec des techniques d'impression industrielles permettant une meilleure registration de l'élément et par une réduction des coûts afin de permettre la multiplication des éléments de sécurité sur un même document de valeur renforçant ainsi son inviolabilité.

**Brève description de l'invention**

L'un des buts de l'invention est donc de remédier aux inconvénients précités et de répondre aux besoins précités en proposant un dispositif conforme à la revendication 1.

Ce dispositif comporte un ensemble de microstructures tridimensionnelles, possédant au moins une face optiquement réfléchissante, agissant comme des micro-miroirs. Ces microstructures sont formées sur une surface d'un substrat définissant un plan P dans lequel une base de chaque microstructure s'étend. Le dispositif de l'invention se caractérise par un agencement desdites microstructures en une pluralité de sous-ensembles de microstructures présentant au moins un angle planaire azimutal $\theta$ identique entre elles au sein d'un sous-ensemble, où $\theta$ est défini entre une direction parallèle à au moins une face réfléchissante de ladite microstructure et un axe de référence fixe du dispositif dans le plan P. De plus, le ou les angles planaire azimutaux $\theta$ identique et commun aux microstructures d'un ou plusieurs sous-ensemble(s) sont également différents de ceux des microstructures constitutives d'autres sous-ensembles présents dans ledit dispositif, de manière à afficher au moins une image transitoire présentant des propriétés optiques variables en fonction de l'angle d'observation.

Au sens de la présente invention, l'angle planaire azimutal $\theta$ correspond à l'angle, dans le plan P de la surface du substrat sur laquelle une dite microstructure est formée, entre un axe parallèle à au moins une face réfléchissante de ladite microstructure et un axe de référence fixe du dispositif. Les deux axes susmentionnés sont parallèles au plan P, dans lequel se situe l'angle azimutal $\theta$ qui est donc totalement indépendant de la hauteur des microstructures, par opposition aux reliefs en forme de cale de l'art antérieur. Par conséquent l'effet visuel affiché par un élément de sécurité non-diffractif selon le dispositif de la présente invention est indépendant de la hauteur des microstructures en relief qui le composent ou de leurs formes dans un plan perpendiculaire au plan P de la base desdites microstructures.

Le dispositif de l'invention permet de réaliser des éléments de sécurité de type non-diffractifs selon des procédés de réalisation simples et reproductibles de très grande précision, même à grande échelle, contrairement aux techniques de l'art antérieur. En effet, les microstructures tridimensionnelles du dispositif inventif peuvent être réalisées par exemple par tout procédé comprenant au moins une étape de photolithographie suivie d'une étape de gravure. Ces méthodes sont bien connues et maîtrisées de l'homme du métier et permettent notamment la gravure de plaques d'impression de microreliefs pouvant avoir des dimensions de l'ordre de 1m x 1m, qui sont compatibles avec les méthodes de transfert par rotogravure, par taille douce ou encore par lamination de documents de valeur comme des cartes d'identité ou cartes de page de données (ou « datapage » en anglais) de passeport.

Ces méthodes de réalisation présentent de plus l'avantage de permettre une formation simultanée de tous les sous-ensembles de microstructures d'un dispositif considéré sur un même support. Tous les reliefs composant l'élément non-diffractif selon l'invention sont donc gravés en même temps et sont donc tous sensiblement de la même hauteur ou profondeur.

Enfin, un avantage très important de l'invention réside dans la très grande précision de l'angle azimutal $\theta$ d'un sous-ensemble de microstructures selon le dispositif de la présente invention par rapport à la valeur souhaitée. Ainsi, lorsque les microstructures sont obtenues par photolithographie-gravure telle que précédemment évoqué ci-dessus par exemple, l'erreur maximale angulaire sur l'angle planaire azimutal $\theta$ pour un sous-ensemble de microstructures d'angle planaire azimutal identique est donnée par l'arctangente du rapport entre la résolution spatiale de la photolithographie et la longueur de chaque microstructure dudit sous-ensemble. Une erreur maximale typique est de 0.5 degrés pour une microstructure ayant une longueur de 150 $\mu$m. De surcroit si une netteté supplémentaire est souhaitée, il suffit de rallonger l'élément de relief.

Le dispositif de l'invention permet ainsi d'afficher au moins une image transitoire présentant des propriétés optiques variables en fonction de l'angle d'observation, l'image transitoire étant affichée avec une très grande netteté par comparaison aux images obtenus selon les techniques non-diffractives de l'art antérieur.

Dans le dispositif selon l'invention, la réflexion spéculaire est modulée pour chaque sous-ensemble de microstructures par l'angle azimutal planaire $\theta$ d'au moins une de ses faces.

Selon un mode de réalisation du dispositif inventif, chaque microstructure est un élément sensiblement prismatique identique ou sensiblement identique pour chaque microstructure d'un sous-ensemble, ledit élément prismatique ayant deux faces opposées et différenciés entre elles uniquement par l'angle azimutal de ladite microstructure.

Les microstructures, et plus particulièrement la base de celles-ci dans le plan de la surface sur laquelle elles sont formées, peuvent revêtir différentes formes, plus particulièrement différentes formes trilatérales ou quadrilatérales, de côté droit ou courbe, comme une forme carrée, rectangulaire, losange, un trapèze, triangulaire ou sensiblement triangulaire. De même, elles peuvent présenter au moins trois facettes réfléchissantes, formant des plan inclinés s'étendant depuis la base en saillie par rapport au plan P dans lequel la base s'étend. Dans ces cas, chaque microstructure sera caractérisée par autant d'angles azimutaux $\theta$ qu'il y a de plans inclinés.

Pour un angle d'illumination fixe, toutes les faces desdites microstructures en forme de prisme présentant un angle azimutal $\theta$ donné réfléchissent la lumière vers l'observateur, selon cette première caractéristique avantageuse de l'invention, l'image transitoire affichée à cet angle la correspond donc à la forme dudit sous-ensemble. Si le dispositif est incliné ou tourné, un autre sous-ensemble de microstructures en forme de prisme, caractérisé par un angle azimutal $\theta$ différent de celui du premier sous-ensemble, réfléchira la lumière vers l'observateur.

Il en suit qu'un mouvement d'inclinaison ou de rotation du dispositif affichera une succession d'images transitoires, constituant une animation formée par l'affichage séquentielle des réflexions lumineuses de chaque sous-ensemble en succession. Dans un sous-ensemble, les microstructures peuvent être agencés en droites, courbes, en forme de lignes de type zigzag, fermées ou ouvertes, ou un mélange de ceux-ci. Ainsi, toute succession de sous-ensemble ne présentant aucune hystérèse spatiale en fonction de l'angle d'inclinaison peut constituer une animation selon la présente invention.

Selon un mode de réalisation du dispositif inventif, une image comporte au moins deux zones distinctes, elles-mêmes constituées de sous-ensembles formant une animation telle que décrite précédemment. Les deux zones sont respectivement une première zone dite d'image transitoire et au moins une autre zone dite d'image latente, dans laquelle des microstructures constitutives de sous-ensembles sont uniquement assignées à l'une de ces au moins deux zones d'image.

Ces zones d'images se distinguent les unes des autres par le fait que les angles planaires azimutaux $\theta$ des

microstructures dans chacune desdites zones présentent une dépendance non-linéaire à au moins une direction s commune à toutes les zones d'image.

Selon la présente invention, cette fonction $\theta(s)$ est différente pour chacune desdites zones. Avantageusement, les fonctions non-linéaires dans chacune desdites zones font partie de la même famille de courbes passant par la même valeur $\theta$ pour au moins une et préférablement deux valeurs de s.

Plus particulièrement selon des modes de réalisation préférés de l'invention les fonctions $\theta(s)$ dans chacune desdites zones sont des fonctions arctangente décrites par :

$$\theta(s); s_{st} \leq s \leq s_e \quad (1)$$

$$\theta - \theta_0 = B\tan^{-1}[k(s - s_0)] (2)$$

où :

$s_{st,}$ est le début de la plage des valeurs en la dimension s pour l'ensemble desdites zones et microstructures,
$s_e$ est la fin de la plage des valeurs en la dimension s pour l'ensemble desdites zones et microstructures,
et $\theta_0$ et $s_0$ sont les valeurs médianes respectives de $\theta$ et de s dans ladite plage.

En outre, l'angle planaire azimutal $\theta$ est différent pour chaque zone, et défini par des variables B et k différentes telles que :

$$B = \frac{2(\theta - \theta_0)}{\pi} (3)$$

et

$$k = \frac{1}{(s_{st} - s_0)} \tan\left[\frac{\theta - \theta_0}{B}\right] (4)$$

Où $\alpha_C$ est une valeur asymptotique de $\theta$ lorsque $s \to \infty$ ou $s \to -\infty$.

De préférence, la dépendance de $\theta$ sur s est décrite par une portion de ladite fonction arc tangente.

Les deux modes de réalisation décrits précédemment exploitent avantageusement l'organisation de microstructures en sous-ensembles pour l'affichage d'images transitoires dites « dynamiques ».

La liberté de forme des bases des microstructures permet, dans le cadre des modes de réalisation d'images transitoires dynamiques décrites précédemment, de gérer par exemple l'imbrication des microstructures dans le but de maximiser leur densité surfacique multipliant ainsi la quantité de lumière réfléchie à un angle azimutal $\theta$ donné. Elle est également exploitée avantageusement pour réaliser des images transitoires dites « fixes ». Dans une image transitoire fixe, différents motifs sont affichés dans la zone de l'image à différents angles de vue, à l'exclusion, ou presque, des motifs visibles aux autres angles de vue.

Dans un mode de réalisation d'images transitoires fixes, un angle azimutal est assigné à l'avant-plan et un autre angle azimutal différent est assigné à l'arrière-plan de chacun des motifs à afficher dans le contexte de ladite image transitoire. Par exemple, si l'un des motifs à afficher est une étoile, un angle azimutal est assigné à l'étoile (avant-plan) est un autre angle azimutal au reste du motif (arrière-plan), et ceci pour chacun des motifs à afficher.

Pour afficher $n$ motifs dans une image transitoire fixe, $n$ étant un nombre entier supérieur à 1, et lesdites images transitoires étant chacune respectivement visibles à des angles d'observation différents, il existe $2^n$ permutations de recoupement spatial (par exemple une permutation possible pour $n = 3$ est : avant plan du motif 1 recoupe au même endroit les arrière-plans des motifs 2 et 3) possibles entre les avant- et arrière-plan des n motifs entre eux et, à un endroit quelconque de l'image, $n$ angles azimutaux $\theta_n$ à reproduire sur les microstructures qui s'y trouvent. Dans ce même mode de réalisation d'images transitoires fixes, la forme de la base des microstructures et leur agencement sont choisis de telle manière à pouvoir reproduire ces $n$ angles azimutaux dans chacun des $2^n$ types de zones de recoupement (correspondant aux $2^n$ permutations de recoupement) présentes sur l'image.

Pour maximiser le contraste visuel entre l'avant et arrière-plan d'un motif aux angles d'observation où celui-ci est visible, il est avantageux de leur assigner des angles azimutaux $\theta$ aussi écartés l'un de l'autre que possible. De même, pour $n$ motifs à afficher, il est avantageux de répartir les 2n angles azimutaux $\theta_1, \cdots, \theta_n$ requis de manière régulière sur l'arc de 180° des angles azimutaux possible pour faciliter l'imbrication des microstructures afin de maximiser la quantité de lumière réfléchie. Toutefois, en fonction des exigences d'un motif donné et de la précision de la méthode utilisée pour sa réalisation, n'importe quel ensemble d'angles azimutaux suffisamment distincts est assignable pour mettre en oeuvre une image transitoire fixe selon la présente invention.

Les motifs peuvent avantageusement représenter une devise pouvant revêtir la forme d'au moins un caractère alphanumérique, d'au moins une représentation tel un portrait ou une fleur ou toute autre représentation ou un mélange de ceux-ci.

Conformément à diverses caractéristiques particulières et avantageuses du dispositif de l'invention :

- au moins un côté des faces de la dite microstructure présente une longueur supérieure à $30\mu$m, préférentiellement d'au moins 60 $\mu$m ;

- les microstructures ou les sous-ensembles sont recouverts en totalité ou partiellement ou recouvrent au moins une couche modifiant les propriétés optiques de la microstructure,

- la couche modifiant les propriétés optiques de la microstructure comporte au moins un polymère fonctionnalisé ou non, au moins une couche métallique ou une couche ayant un indice de réfraction différente de celle de la matière composant lesdites microstructures,

Selon diverses formes de mise en oeuvre du dispositif de l'invention les microstructures peuvent être formées sur :

- un premier substrat formant une matrice originelle.

- un outil tel qu'un cliché plat ou courbe,

- une plaque de lamination,

- une matrice en Nickel, notamment pouvant envelopper un cylindre d'impression, un insert de moule de forme ou un moule, comprenant le négatif desdites microstructures,

- un support, notamment un film en polymère.

- au moins une couche d'un empilement de films en polymère, de papier ou un mélange des deux.

Les microstructures peuvent ainsi être imprimées, gravées, embossées, ou moulées sur au moins une des faces d'un substrat support de sorte à former une structure tridimensionnelle. Le substrat support peut en outre être un polymère, une céramique, un papier, un emballage, un billet de banque, une carte bancaire ou de crédit, un document d'identité, une surface en verre, une surface en métal, un fil de sécurité, une bande ou zone individualisée sur le support.

Un mode de réalisation avantageux du dispositif de l'invention prévoit par ailleurs la formation des microstructures par-dessus une couche présentant des propriétés optiques sensiblement uniformes, ladite couche pouvant être agencée sur le verso de la surface portant lesdites microstructures où sur l'une quelconque des autres couches dans un empilement de films en polymère et lesdites microstructures étant formées au moins partiellement au-dessus de ladite couche.

Dans une telle réalisation, la couche optiquement uniforme sera avantageusement formée d'un réseau diffractif, d'une ou plusieurs couche-mince(s) transparentes agencées de telle manière à afficher un effet optique interférentiel, d'un à plat d'encre imprimé ou une combinaison de ces dernières.

L'invention concerne enfin également un document de valeur tel un billet de banque, un document officiel, un document d'identité, un emballage ou un produit fini comprenant un dispositif selon l'une quelconque des revendications précédentes

**Brève description des figures**

L'invention sera mieux comprise à la lecture de la description détaillée de modes de réalisations préférés de l'invention faite en relation des figures annexées, parmi lesquelles :

- La FIG. 1 illustre schématiquement la différence entre un angle altitudinal $\alpha$, perpendiculaire au plan P de l'image formé par les facettes des microstructures de l'art antérieur et l'angle azimutal $\theta$ dans le plan P de l'image formé par les microstructures du dispositif de l'invention ;

- La FIG.2 illustre schématiquement un dispositif selon l'invention comprenant une série de microstructures de forme prismatique, orientées selon un angle planaire azimutal $\theta$, fonction ici de la distance $s$, lesdites microstructures étant agencées en sous-ensemble sous forme de plusieurs images transitoires ayant la forme d'une ligne verticale. Les lignes s'affichant successivement lors d'un mouvement d'inclinaison ou de rotation du dispositif de telle manière à former une animation qui parait continue à l'œil humain selon une caractéristique avantageuse du dispositif de l'invention ;
- La FIG.3 illustre schématiquement un autre mode de réalisation de l'invention, à savoir l'agencement de microstructures associées à une zone d'image transitoire et une zone d'image latente pour afficher une image latente dynamique selon l'une des caractéristiques avantageuses de l'invention ;

- La FIG.4 illustre schématiquement les relations entre l'angle $\theta$ et la distance s entre les microstructures associées à la zone d'image transitoire et la zone d'image latente pour afficher une image latente selon l'une des caractéristiques avantageuses de l'invention ;
- La FIG.5A illustre schématiquement différents sous-ensembles comprenant différents types de microstructures disposées en zigzag afin d'afficher deux motifs transitoires fixe à deux angles de vue différents ;
- La FIG.5B illustre schématiquement la disposition des sous-ensembles en fonction des zones du dispositif pour afficher deux motifs transitoires fixe à deux angles de vue différents ;
- La figure 5C illustre une coupe transversale selon un plan A-A' d'un élément de cette microstructure en zigzag;
- La FIG.6A illustre schématiquement une pluralité de microstructures tridimensionnelles à forme de base sensiblement triangulaire caractérisés par différents angles $\theta$ et comprises dans un sous-ensemble ;
- La FIG.6B illustre schématiquement un exemple d'image triple utilisant des structures tridimensionnelles telles que décrites en FIG. 6A.

## Description détaillée

La présente invention va être décrite de façon plus détaillée et à l'aide de plusieurs exemples non limitatifs.

Le dispositif de l'invention 1 est un dispositif de sécurité de type réflectif se caractérisant par un agencement de microstructures en une pluralité de sous-ensembles de microstructures présentant au moins un angle planaire azimutal $\theta$ identique, cet angle $\theta$ étant défini pour chaque microstructure entre une direction parallèle à au moins une face réfléchissante de ladite microstructure et un axe de référence fixe du dispositif dans un plan P contenant une base de chaque microstructure. L'aménagement des microstructures du dispositif de l'invention selon un angle azimutal $\theta$ dans le plan P est fondamentalement différent de l'aménagement des microstructures selon un angle altitudinal $\alpha$ perpendiculaire au plan P de base selon l'art antérieur tel que décrit dans EP1966769 et DE102010047250. L'aménagement du dispositif de l'invention remédie aux désavantages précités de l'art antérieur notamment en permettant des microstructures ayant toutes sensiblement la même profondeur ou hauteur, en permettant la réalisation desdites microstructures sur des larges surfaces sans complexage par le biais d'un support intermédiaire et enfin en améliorant sensiblement la netteté des images.

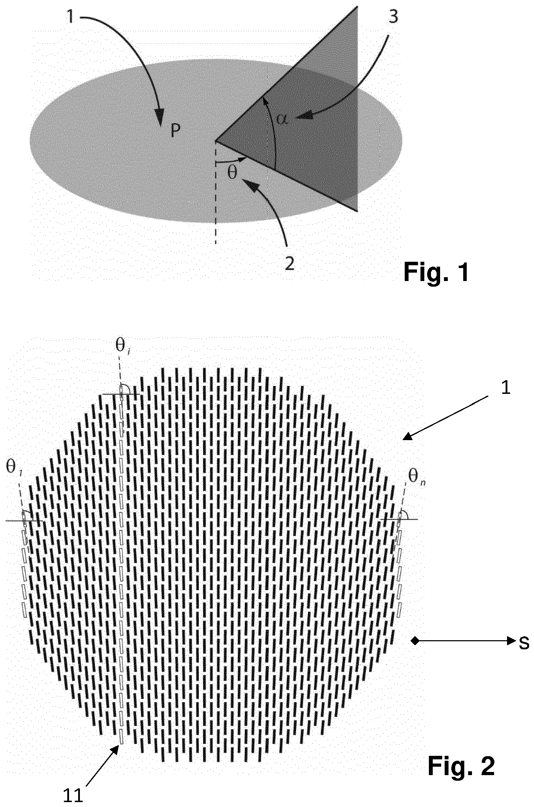

Le dispositif selon l'invention 1 est composé d'un ensemble de microstructures tridimensionnelles particulières telles que par exemples représentées dans les figures 2, 5A à 5C et 6A à 6B, et qui permet de lutter efficacement contre la contrefaçon. Le dispositif à l'avantage d'être robuste contre la photocopie ou les méthodes de reprographie numérique.

Les microstructures tridimensionnelles, par exemple 11, 12, 41, 61, possèdent au moins une face optiquement réfléchissante agissant comme des micro-miroirs et sont structurées sous forme de reliefs présents sur une surface et formées par tous moyens appropriés comme il sera décrit par la suite.

Conformément à l'invention, lesdites microstructures sont agencées en une pluralité de sous-ensembles présentant au moins un angle planaire azimutal $\theta$ identique. De plus, le ou les angle(s) planaire azimutaux $\theta$ commun aux microstructures d'un ou plusieurs sous-ensemble(s) sont différents de ceux des microstructures constitutives d'autres sous-ensembles présents dans ledit dispositif, de manière à afficher au moins une image transitoire présentant des propriétés optiques variables en fonction de l'angle d'observation.

Au sens de la présente invention, l'angle planaire azimutal $\theta$ correspond à l'angle dans le plan de la surface du substrat sur laquelle une dite microstructure est formée, entre une direction parallèle à au moins une face réfléchissante de ladite microstructure et un axe de référence fixe du dispositif.

Un des avantages de l'invention réside dans la multiplicité de formes que les microstructures, et plus particulièrement la base de celles-ci, peut adopter, procurant une multiplicité d'images transitoires potentielles atteignables pour le dispositif de l'invention. Ainsi la base de chaque microstructure peut-être être de forme carrée, rectangulaire, de losange, trapézoïdale, triangulaire, pyramidale, de zigzag ou très allongée ou un mélange de ces formes, dans une dimension par rapport aux autres dimensions caractérisant la forme de ladite microstructure.

Au sens de la présente invention, les formes telles que décrites s'entendent en tant que telle, mais aussi revêtant sensiblement ladite forme, en effet il n'est jamais exclu que lors de la formation de la microstructure selon la forme désirée par les méthodes décrites ci-dessous on puisse obtenir la forme désirée en tant que telle, mais aussi une forme qui s'en approche sensiblement. En effet tout processus de création d'une structure ou d'une forme celle-ci, ne fonctionne pas forcément toujours parfaitement, des artéfacts ou défauts de mise en place pouvant toujours intervenir.

Au sens de la présente invention, une image transitoire correspond au lieu unique de toutes les microstructures sur un dispositif présentant au moins une facette avec un même angle azimutal $\theta$ en commun. Dans un premier mode de réalisation de l'invention une image animée sera constituée de plusieurs sous-ensembles de microstructures représentant un même motif ou l'évolution dans l'espace d'un même motif sans hystérèse spatial. Ces plusieurs sous-ensembles seront espacés d'au moins 10 micromètres, préférablement plus que 30 micromètres et préférablement moins que 200 micromètres, les microstructures appartenant à chaque sous-ensemble représentant un motif, ou l'évolution d'un motif particulier ont un angle azimutal $\theta$ identique et qui sera proche de ceux des microstructures assignées aux sous-ensembles voisins. Dans le cas où le motif sera une ligne ou une droite ou une courbe celle-ci sera répétée ou évoluera dans un espace un nombre $n$ de fois et sera donc caractérisé par $n$ sous-ensembles 12, chacun de ces sous-ensembles étant composées de microstructures ayant un angle azimutal $\theta_i$ les angles $\theta_1$, $\theta_2$, $\theta_3$ etc··· étant différents et réfléchissant la lumière à un angle d'observation donné - mais proche pour chaque $\theta_i$ successif

Du fait de l'espacement et la multiplicité des images transitoires présentes dans un espace donné et conjointement à l'observation sous différents angles proches et successifs d'observation, le motif représenté apparaîtra sous une forme animée. La différence d'angle $\theta$ assigné à deux sous-ensembles voisins est typiquement inférieure à 2° et préférablement inférieure à 0.5°.

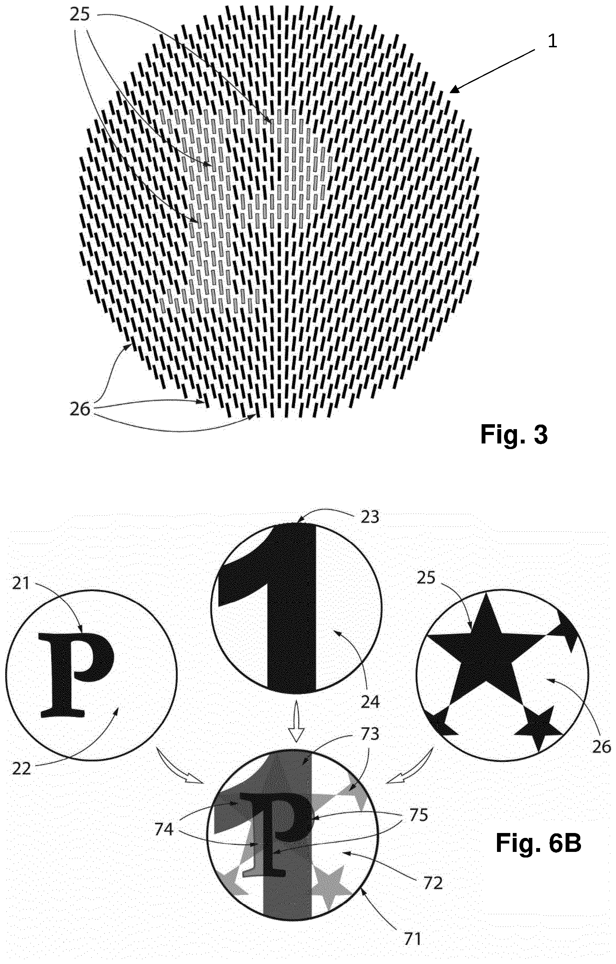

Dans un second mode de réalisation de l'invention, une image transitoire telle que décrite précédemment est utilisée pour révéler une image latente, difficile à percevoir si cette dernière était seule présente, en l'absence d'une image transitoire. Dans ce second mode de réalisation, l'image entière est constituée d'au moins deux zones d'image distinctes, respectivement une première zone dite d'image transitoire 25 et au moins une autre zone dite d'image latente 26. Chaque image selon ce second mode réalisation de l'invention est ainsi définie par au moins deux zones correspondant à une image transitoire additionnée d'une image latente telles que représentées en Fig. 3. L'image animée obtenue peut être réalisée de telle manière qu'elle affiche une image latente telle que (mais pas limitée à) un dessin, des caractères alphanumériques ou un code lisible par machine

Dans ce mode de réalisation les microstructures avec un angle azimutal $\alpha$ identique, constitutives de sous-ensembles, sont uniquement assignées à l'une de ces au moins deux zones d'image (transitoire ou latente). Dans ces différentes zones d'image les angles planaires azimutaux $\theta$ des microstructures présentent une dépendance non-linéaire à au moins une direction $s$ commune à toutes les zones d'image, définie par une fonction idoine $\theta(s)$ différente pour chacune desdites zones. En outre, les fonctions non-linéaires $\theta(s)$ dans chacune desdites zones font partie de la même famille de courbes passant par la même valeur $\theta$ pour au moins une, et préférablement deux valeur(s) de s.

Dans une incarnation préférée, chacune desdites au moins deux zones d'image est une fonction circulaire réciproque $\theta(s)$ du type arctangente différenciée d'une zone à l'autre par une valeur asymptotique de $\theta_{(s)}$ différente lorsque $s \to \infty$ et/ou $s \to -\infty$.

Lesdites fonctions circulaires réciproque sont exprimées par :

$$\theta(s); s_{st} \leq s \leq s_e \quad (1)$$

$$\theta - \theta_0 = B\,tan^{-1}[k(s - s_0)] \quad (2)$$

où :

$s_{st,}$ est le début de la plage des valeurs en la dimension s pour l'ensemble desdites zones et microstructures
$s_e$ est la fin de la plage des valeurs en la dimension s pour l'ensemble desdites zones et microstructures
et $\theta_0$ et $s_0$ sont les valeurs médianes respectives de $\theta$ et de $s$ dans ladite plage.

En outre, l'angle planaire azimutal $\theta$ est différent pour chaque zone, et défini par des variables B et k différentes telles que:

$$B = \frac{2(\theta_c - \theta_0)}{\pi} \quad (3)$$

et

$$k = \frac{1}{(s_{st} - s_0)} tan \left[ \frac{\theta_{st} - \theta_0}{B} \right] (4)$$

Où $\alpha_C$ est une valeur asymptotique de $\theta$ lorsque $s \to \infty$ ou $s \to -\infty$.

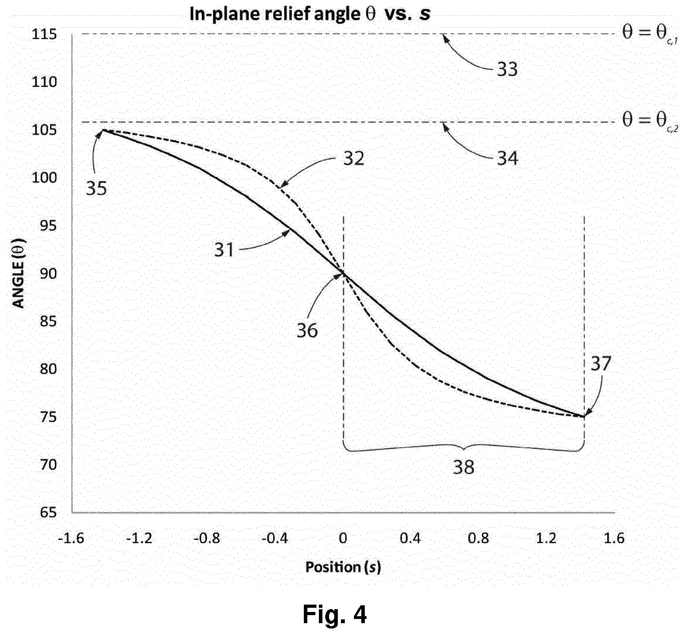

Comme cela ressort plus particulièrement des figures 3 et 4 les microstructures associées à l'image transitoire 25 et l'image latente 26 de l'image, tout en étant disposées selon la formule ci-dessus, ont des valeurs B et k différentes définies par une valeur asymptotique de $\theta$ différente assignée à chaque sous-ensemble de microstructures associées respectivement l'image transitoire et l'image latente de l'image. Sur la figure 3, la courbe 31 représente la dépendance de $\theta$ en fonction de s pour les microstructures associés l'image transitoire 25, et la courbe 32 celle des microstructures associées à l'image latente 26. Les deux courbes sont caractérisées par des valeurs d'angle planaire azimutal $\theta$ différentes. L'image transitoire sera affichée par le décalage entre l'animation de l'image transitoire en premier-plan et celle de l'image latente en arrière-plan en fonction de l'angle azimutal $\theta_i$.

Par ailleurs, comme indiqué par la Fig.4, il n'y a aucun décalage entre les animations de l'image transitoire 25 et l'image latente26 aux points 35, 36 et 37 des courbes 31, 32. En effet en ces points la valeur s est égale à $s_{st}$, $s_0$ et $s_e$. La visibilité de l'image transitoire est maximale entre ces points mais le premier plan et arrière-plan sont en revanche du point de vue de l'observateur confondus en ces mêmes points. Pour l'affichage de certaines images, le recoupement des valeurs d'$\theta$ au point 36 ($s_0$) est parfois indésirable. Une alternative avantageuse préférée selon l'invention consiste alors à n'utiliser que le demi-arc tangente 38, en substituant $\theta_e$ pour $\theta_0$ et $s_e$ pour $s_0$ dans les équations (1)-(4) ci-dessus pour le calcul des valeurs *B et k*.

En respectant cette conformation et cette organisation des microstructures il est ainsi possible d'afficher une ou plusieurs images latentes, qui paraissent comme révélée(s) par l'image transitoire. Avantageusement, parce que les angles $\theta$ des microstructures associées respectivement aux images latentes et à l'image transitoire sont identiques à au moins une et préférablement deux valeurs de s, l'écart d'angle $\theta$ entre les microstructures associées aux images latentes et à l'image transitoire reste suffisamment faible à toute valeur de s, pour que le ou les images latentes ne soient visibles que lorsque l'image transitoire l'est aussi.

Pour les modes de réalisation décrits précédemment, les microstructures sont espacées entre elles d'au moins 10 micromètres et préférablement d'entre 30 et 200 micromètres. Afin d'assurer la perception de continuité d'une animation de motif transitoire selon les modes de réalisation décrites précédemment, le nombre de sous-ensembles doit être maximisé et ils seront préférablement espacés entre eux d'une distance identique à l'espacement des microstructures elles-mêmes. Enfin, il en découle de la description ci-dessus que les distances et les espacements des, respectivement, microstructures et sous-ensembles constitutifs d'une image latente sont identiques à ceux d'une image transitoire animée.

L'ensemble des modes de réalisation précités forme des images transitoires dites « dynamiques » et ont pour caractéristique commune d'afficher une animation lorsque le substrat porteur desdites images est incliné ou tourné.

Dans un autre mode de réalisation, les microstructures constituées en sous-ensemble sont agencées de telle manière à afficher *n* motifs transitoires fixes ou *n* est un nombre entier supérieur ou égal à deux. Pour ce mode de réalisation, chacune des *n* motifs transitoires fixes à afficher comprend un avant-plan et un arrière-plan mutuellement exclusif et les microstructures du dispositif sont agencés en $2^n$ types de sous-ensembles correspondant aux permutations possibles de recoupement entre les avant et arrière-plans des *n* images différentes sous ces conditions. Le nombre total de sous-ensembles sera exactement égal au nombre de zones ou les avant et arrière-plans des *n* images se recoupent.

Ainsi pour le cas d'une image double ou n égal 2, la forme des microstructures peut être adaptée pour afficher soit l'une ou l'autre de deux images distinctes, formées chacune d'un avant-plan 21, 23 et d'un arrière-plan 22, 24, selon l'angle relatif entre l'illumination et la position de l'observateur.

Les deux images peuvent se recouper spatialement. Pour cet effet de double-image les microstructures sont disposées dans un plan commun en zigzag, la section de chaque branche des zigzags comprenant au moins une facette.

Un exemple de microstructure adaptée pour afficher une double image est un élément assimilable à un prisme de largeur « a » d'au moins 0.8 micromètres et préférablement entre 5 et 50 micromètres et d'une section quelconque 49 ayant au moins une surface réfléchissante S, formant, dans le sens de sa longueur, un zigzag où les angles azimutaux, $\theta_1$ et $\theta_2$ des branches successives 42, 43 basculent de plus et de moins $\Delta\theta$ 44. Ce type de sous-ensemble 41 peut être imbriqué dans un pavage régulier ou irrégulier 45 de reliefs du même type. Dans cet arrangement, la longueur 46 de chaque branche du sous-ensemble en zigzag est indépendante de l'espacement 47 entre ce dernier sous-ensemble 41 et son voisin 48 dans le pavage.

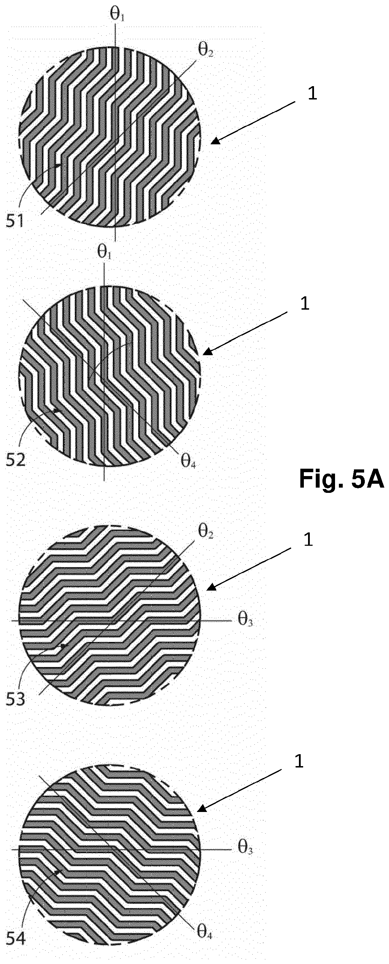

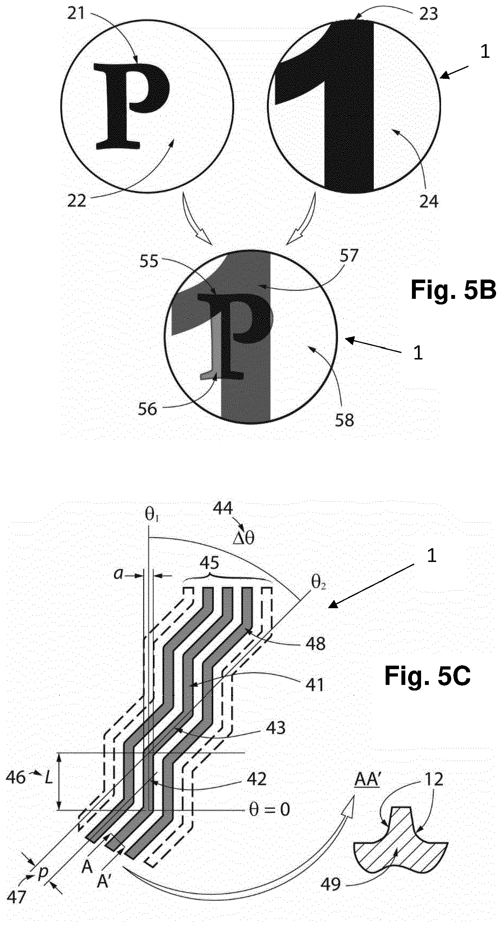

La double image est formée de plusieurs sous-ensembles de microstructures. A chaque sous-ensemble est assigné l'un de quatre types de microstructures (FIG 5A) disposé en zigzag, caractérisé par des branches 51, 52, 53, 54 ayant comme angles azimutaux successifs respectivement : $\theta_1$ et $\theta_2$, $\theta_1$ et $\theta_4$, $\theta_2$ et $\theta_3$ ou $\theta_3$ et $\theta_4$. Ces quatre types de microstructures disposés en zigzag correspondent aux zones (FIG 5B) ou, respectivement : l'avant plan de la première image coupe celui de la deuxième image en 55, l'avant plan de première image coupe l'arrière-plan de la deuxième image en 56, l'arrière-plan de la première image coupe l'avant plan de la deuxième image en 57 et enfin les deux arrière-plans de la première et la deuxième image se coupent en 58.

L'angle de basculement $\Delta\theta$ entre deux bras du même zigzag dépend des angles azimutaux $\theta_1$, $\theta_2$, $\theta_3$ et $\theta_4$ assignés à l'avant et l'arrière-plan de chaque image. Dans un mode de réalisation préféré de la présente invention, $\Delta\theta$ est de 45°. Comme décrit précédemment, l'ensemble des microstructures disposées en zigzag est caractérisé par un espacement dans le plan maitrisable et indépendant de la longueur des branches. Cette caractéristique novatrice de la présente invention permet d'augmenter la quantité de lumière réfléchie par un sous-ensemble de microstructures, en resserrant leur espacement 47 indépendamment de la longueur 46 des branches des zigzags, longueur définie essentiellement de la méthode de fabrication utilisée pour réaliser les microstructures.

Il est possible de réaliser d'autres formes de relief avec la même méthode utilisée pour former les prismes décrits précédemment. Par exemple un prisme d'une longueur « L » beaucoup plus importante que la largeur « a », ou encore un prisme caractérisé par une largeur « a » dessinant une ligne quelconque dans le plan. En particulier un prisme de largeur « a » formant, dans le sens de sa longueur, un zigzag ou l'angle azimutal des branches successives bascule de 45 degrés. La présente invention utilise de tels prismes en zigzag pour afficher, dans une même région, deux images 41, 42 distinctes à deux angles de vue différents, en assignant un angle azimutal de branche de zigzag à l'avant-plan 43 et à l'arrière-plan 44 de chacune des deux images. Par exemple les azimuts 0° et 90° à l'avant et l'arrière-plan de la première image et les azimuts 45° et 135°à l'avant et l'arrière-plan de la deuxième image. L'ensemble des prismes en zigzag 45 est caractérisé par un espacement 46 dans le plan maîtrisable et indépendant de la longueur des branches 47.

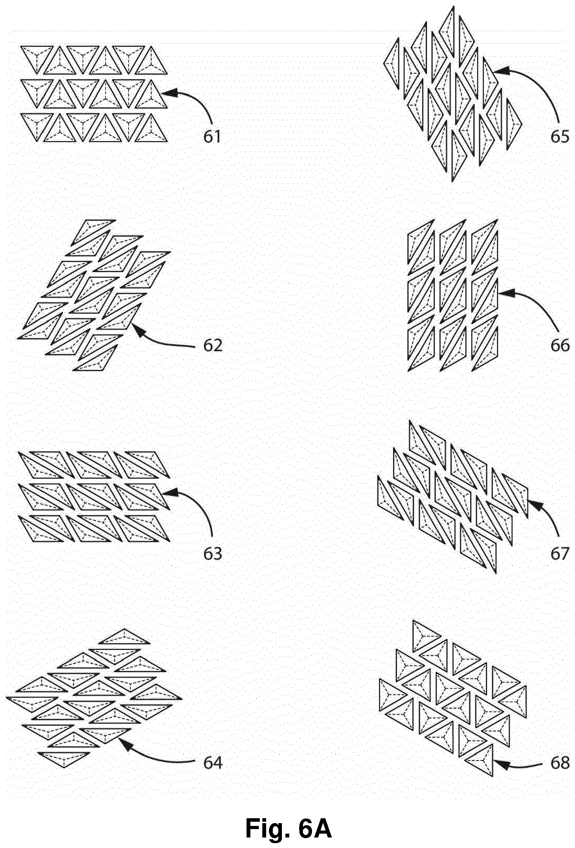

De manière analogue la forme et agencement des microstructures peut être adaptée pour afficher l'une de trois images distinctes, en utilisant des microstructures de forme sensiblement triangulaire dans le plan telles que représentées de façon non limitative en Fig. 6A. Suivant le même principe que pour la double image décrite précédemment, un angle azimutal différent est assigné à respectivement, l'avant et arrière-plan de chacune des trois images à afficher, soit six angles azimutaux en tout. Préférablement, et par rapport à un angle fixe de référence, les angles azimutaux 0, 60 et 120 degrés sont assignés respectivement aux avant-plans de la première, la deuxième et la troisième image et les angles azimutaux 90, 150 et 30 degrés sont assignés respectivement aux arrière-plans de ces mêmes trois images. De manière analogue à la double-image décrite précédemment, il en résulte les 8 types de sous-ensemble référencés 61,···,68) illustrés en Fig. 6A, associés aux 8 types de zones de recoupement possibles (respectivement référencées 71,···,78) entre les avant et arrière-plans de trois images différentes illustrés en Fig. 6B.

Enfin, dans un autre mode de réalisation d'une image à $n$ motifs transitoires fixes selon la présente invention les microstructures telles que représentées en Fig. 6A (respectivement référencées 61, ···, 68) peuvent chacune être remplacées par $n$ éléments prismatiques 11 agencés de telle manière à être parallèles à chacun des bords de la forme de base des microstructures, en l'espèce un triangle.

Le dispositif selon l'invention présente l'avantage de pouvoir introduire une grande variabilité dans les motifs ou images qu'il affiche et ce de façon dynamique ce qui complexifie la copie par des techniques d'impression et de reproduction conventionnelles. Il présente aussi l'avantage de créer une grande variabilité en jouant sur l'agencement, et la forme des microstructures présentes au sein du dispositif et agencées en sous-ensemble dans celui-ci.

L'espacement des microstructures tridimensionnelles composant le dispositif entre elles est tel que les images transitoires ainsi obtenues ne diffractent pas la lumière et ne présentent par conséquent aucune irisation.

Les microstructures selon l'invention peuvent dans le plan P de la surface sur laquelle elles sont formées présenter une base de différentes formes. Ainsi, la base des microstructures dans le plan P peut être de forme carrée, rectangulaire, losange, trapézoïde, triangulaire ou sensiblement triangulaire voire pyramidale ou sensiblement pyramidale ou un mélange de celles-ci. Quelle que soit la forme d'une microstructure utilisée, selon la présente invention elle est dotée d'au moins une facette réfléchissante, cette facette pouvant être sensiblement plane ou courbe, et dotée d'un angle $\theta$ particulier. Selon la présente invention, le terme réfléchissant s'entend relatif aux autres portions de la même microstructure, à un angle d'illumination donnée par rapport à l'observateur.

Enfin, selon l'invention, les microstructures ont toutes au moins une face de dimension latérale supérieure à 30 $\mu$m, préférentiellement 60 $\mu$m.

Dans le dispositif selon l'invention lesdites microstructures ou les sous-ensembles peuvent être recouvertes en totalité ou partiellement par au moins une couche métallique, au moins une couche modifiant les propriétés et/ou l'indice de réfraction initial(es) de la microstructure, par une couche modifiant les propriétés et/ou l'indice de réfraction initial(es) on pourra citer sans être exhaustif une couche de liquide cristal polymère ou une couche présentant des propriétés de biréfringence.

Le dispositif selon l'invention est particulièrement avantageux en ce qu'il est possible d'adapter la forme des microstructures pour afficher des images distinctes et différentes à des angles de vue différents sans perte de lumière réfléchie aux endroits où les images distinctes et différentes se recoupent. En outre, la modulation d'angle nécessaire à l'affichage de lignes de champs dynamique s'effectue sur l'angle azimutal $\theta$ dans le plan P plutôt que sur l'angle d'inclinaison hors-plan de la microstructure (angle $\alpha$ dans l'art antérieur) augmentant ainsi la qualité du rendu visuel.

Autre avantage, la qualité des images transitoires affichées est en fonction de la précision de formation de l'angle $\theta$ dans le plan P de l'image, précision qui peut être facilement adaptée en allongeant la longueur de la microstructure dans l'axe de l'angle $\theta$ ou en utilisant une méthode de masquage ayant plus de précision. Tous ces avantages remédient aux désavantages précités de l'art antérieur

Le dispositif selon l'invention est aussi particulièrement simple, fiable et avantageux à mettre en oeuvre donc d'un coût attractif pour ce type de dispositif de sécurité, par gravure ou usinage directe de la matière en surface d'un outil servant ensuite au, par exemple, moulage, gaufrage, déformation ou impression par le biais d'une encre ou une résine ou encore l'application en cours de lamination par fusion de plusieurs couches de polymère entre elles du même dispositif.

Comme précédemment évoqué, l'invention permet de réaliser des éléments de sécurité visuels de type non-diffractifs par tout procédé comprenant au moins une étape de photolithographie suivie d'une étape de gravure. Ces méthodes permettent notamment la gravure de plaques d'impression de microreliefs pouvant avoir des dimensions de l'ordre de 1m x 1m, tous les reliefs gravés ayant une hauteur sensiblement identique car ils sont formés simultanément sur un même support, par opposition aux techniques connues de l'art antérieur.

Les microstructures formées sont d'une grande précision, l'erreur maximale angulaire sur l'angle planaire azimutal $\theta$ pour un sous-ensemble de microstructures d'angle planaire azimutal identique étant typiquement de 0.5 degrés pour une microstructure ayant une longueur de 150 $\mu$m. En comparaison à d'autres dispositifs connus de l'homme du métier, il est nettement plus facile d'adapter la profondeur ou hauteur des microstructures à une application donnée. Il rend enfin plus facile l'intégration de différentes formes de microstructures, et donc différents effets optiques, sur un même dispositif, augmentant ainsi la robustesse contre la copie.

Les microstructures dans le dispositif selon l'invention sont obtenues par différentes techniques connues de l'homme du métier telles que : la photolithographie d'une résine photosensible couchée sur un substrat, suivie de la gravure de ce dernier à travers l'épargne formée par la couche de résine photosensible développée ; l'ablation par laser d'un substrat approprié ou encore des méthodes additives telle que l'impression 3D.

Pour certaines applications, en particulier celles dites "roll-to-roll" d'impression en continue de laizes de substrat, un dispositif selon l'invention peut être réalisé sur une première plaque et copiée, par croissance galvanique, sur une matrice fine en Nickel ou alliage de Nickel plus à même d'être enroulé autour d'un cylindre d'impression. Les méthodes ci-dessus sont énumérées à titre d'exemple sans limiter le champ des méthodes possibles pour réaliser un dispositif selon l'invention.

Les microstructures formant le dispositif selon l'invention et obtenues selon les méthodes décrites précédemment peuvent être opaques ou transparentes.

Une fois la microstructure obtenue elle peut, dans un objet de la présente invention, être transférée directement sur un produit par embossage thermomécanique. En utilisant une combinaison des méthodes décrites précédemment, un ou plusieurs dispositifs peuvent être gravée sur des plaques en métal utilisées ultérieurement pour le laminage des couches de polymères qui forment une carte d'identité, page de données de passeport ou toute autre document de valeur composée de couches de polymère laminées ensemble. Dans ces cas, la pression et la température du procédé de laminage sont suffisant pour effectuer une déformation plastique permanente dans les zones du laminat directement en contact avec les microstructures formant ainsi un dispositif selon l'invention à ces endroits-là.

Plus fréquemment, la microstructure obtenue par les méthodes décrites précédemment est transférée selon des techniques bien connues de l'homme de métier sur un support tel qu'une feuille en polymère, en papier, en pré-laminat ou en carton. Ce support peut être utilisé tel quel s'il s'agit d'un matériau d'emballage ou d'un billet de banque en polymère par exemple, dans ce la microstructure transférée sur le support est un objet de l'invention.

La microstructure transférée sur un tel support peut être transformée en ajoutant une couche modifiant les propriétés optiques desdites microstructures, par exemple une couche d'encre, de métal, de matière ayant un indice de réfraction différente au support ou une combinaison de telles matières. Le support portant la microstructure selon la présente invention, qu'il soit transformé ou pas, peut également être intégré dans une construction plus complexe telle que : un élément autoadhésif, une bande métallisée pour application à chaud ou à froid, un fil de sécurité bancaire ou tout autre dispositif complexe de ce type. Dans ce cadre, la couche modifiant les propriétés optiques peut avantageusement être différente de celle portant les microstructures du dispositif de l'invention.

Il en suit qu'un autre objet de la présente invention concerne un document de valeur tel un billet de banque, un document officiel, un emballage comprenant un dispositif selon l'invention, mais également l'utilisation de tels dispositifs selon l'invention comme éléments de sécurité.

Les exemples d'images et de dispositif selon l'invention présentées ainsi que les différents modes de réalisations mentionnés ne limitent en rien dans sa portée l'invention telle que revendiquée, ils sont donnés à titre d'éclairage afin de mieux comprendre l'invention.

Enfin, il est bien évident que les modes de réalisation, ne sont que des illustrations particulières en aucun cas limitatives quant aux domaines d'application de l'invention.

**Revendications**

1. Dispositif comportant un ensemble de microstructures tridimensionnelles, possédant au moins une face optiquement réfléchissante, lesdites microstructures tridimensionnelles étant formées sur une surface définissant un plan P, **caractérisé en ce que** les dites microstructures sont agencées en une pluralité de sous-ensembles (11, 12, 41, 61,···, 68) de microstructures présentant au moins un angle planaire azimutal $\theta$, défini entre une direction parallèle à au moins une face réfléchissante de ladite microstructure et un axe de référence fixe du dispositif dans le plan P, identique, lesdites microstructures d'un ou plusieurs sous-ensemble(s) ayant un angle planaire azimutal $\theta$ identique présentant au moins un angle planaire azimutal $\theta$ différent de celui de microstructures constitutives d'autres sous-ensembles présents dans ledit dispositif, de manière à afficher au moins une image transitoire (25) présentant des propriétés optiques variables en fonction de l'angle d'observation, **caractérisé en ce que** une image comporte au moins deux zones d'image distinctes, respectivement une première zone dite d'image transitoire (25) et au moins une autre zone dite d'image latente (26), dans laquelle des microstructures constitutives de sous-ensembles (11, 12, 41, 61,···, 68) sont uniquement assignées à l'une de ces au moins deux zones d'image, et **caractérisé en ce que** les angles planaires azimutaux $\theta$ des microstructures dans chacune desdites zones (25, 26) présentent une dépendance non-linéaire, différente pour chacune desdites zones, à au moins une direction s commune à toutes les zones d'image et **caractérisé en ce que** les fonctions non-linéaires $\theta(s)$ dans chacune desdites zones font partie de la même famille de courbes passant par la même valeur $\theta$ pour au moins une valeur de s.

2. Dispositif selon la revendication 1, **caractérisé en ce que** chaque microstructure est un élément prismatique identique ou sensiblement identique ledit élément prismatique ayant deux faces opposées et différenciés entre elles uniquement par l'angle azimutal de ladite microstructure.

3. Dispositif selon l'une des revendications 1 ou 2, **caractérisé en ce que** les microstructures d'un dit sous-ensemble sont agencées en droites, courbes, en forme de lignes de type zigzag, fermées ou ouvertes, ou un mélange de ces agencements.

4. Dispositif selon l'une des revendications précédentes, **caractérisé en ce que** une base de chaque microstructure est localisée dans le plan P et est de forme trilatérale ou quadrilatérale, dont les côtés sont droits et/ou courbes.

5. Dispositif selon la revendication 1 où lesdites fonctions $\theta(s)$ dans chacune desdites zones sont des fonctions arc tangente décrites par :

$$\theta\,(s); s_{st} \leq s \leq s_e \ (1)$$

$$\theta - \theta_0 = B\,tan^{-1}\big[k(s - s_0)\big]\,(2)$$

où :

$s_{st,}$ est le début de la plage des valeurs en la dimension s pour l'ensemble desdites zones et microstructures
$s_e$ est la fin de la plage des valeurs en la dimension s pour l'ensemble desdites zones et microstructures
et $\theta_0$ et $s_0$ sont les valeurs médianes respectives de $\theta$ et de s dans ladite plage,
et **caractérisé en ce que** l'angle planaire azimutal $\theta$ en fonction de s des microstructures constituées en sous-ensemble associées à chacune des zones respectivement est différent pour chaque zone, et défini par des variables B et k différentes telles que :

$$B = \frac{2(\theta_C - \theta_0)}{\pi}\,(3)$$

et

$$k = \frac{1}{(s_{st} - s_0)}\,tan\left[\frac{\theta_{st} - \theta_0}{B}\right](4)$$

Où $\alpha_C$ est une valeur asymptotique de $\theta$ lorsque $s \to \infty$ ou $s \to -\infty$.

6. Dispositif selon les revendications 1 dans lequel la dépendance de $\theta$ sur s est décrite par une portion de ladite fonction arc tangente.

7. Dispositif selon les revendications1 à 4 dans lequel lesdits sous-ensembles de microstructures sont agencés de manière à afficher *n* images transitoires, *n* étant un nombre entier supérieur à 1, lesdites images transitoires étant chacune respectivement visibles à des angles d'observation différents.

8. Dispositif selon l'une quelconque des revendications précédentes, dans lequel *n* images transitoires représentent une devise pouvant revêtir la forme d'au moins un caractère alphanumérique, d'au moins une représentation tel un portrait ou une fleur ou tout autre représentation, d'au moins un motif ou d'au moins un symbole ou un mélange de ceux-ci.

9. Dispositif selon la revendication 8, dans lequel les n images transitoires sont chacune respectivement visibles à des angles d'observation différents et dans lequel la forme des microstructure est **caractérisées par** au moins *n* faces ayant des angles azimutaux $\theta$ différents l'une de l'autre, le nombre *n* étant un nombre entier supérieur à 1.

10. Dispositif selon l'une quelconque des revendications précédentes, dans lequel les microstructures et/ou lesdits sous-ensembles sont agencé(e)s de manière à afficher l'image ou les images de façon dynamique sous différents angles de vue du dispositif.

11. Dispositif selon l'une quelconque des revendications précédentes, dans lequel au moins un côté des faces de ladite microstructure présente une longueur supérieure à 30 $\mu$m, préférentiellement d'au moins 60 $\mu$m.

12. Dispositif selon l'une quelconque des revendications précédentes, dans lequel lesdites microstructures ou les sous-ensembles sont recouvertes en totalité ou partiellement par au moins une couche métallique ou une couche ayant une indice de réfraction différente de celle conposant lesdites microstructures ou toute autre couche modifiant les propriétés optiques de la microstructure.

13. Dispositif selon l'une quelconque des revendications précédentes, dans lequel les microstructures sont formés sur un outil tel qu'un cliché plat ou courbe, une plaque de lamination, une matrice en Nickel pouvant envelopper un cylindre d'impression, un insert de moule de forme ou le moule lui-même, comprenant le négatif d'un dispositif selon l'une quelconque des revendications précédentes.

14. Dispositif selon l'une quelconque des revendications précédentes dans lequel les microstructures sont formées sur un support, notamment un film en polymère.

15. Dispositif selon l'une quelconque des revendications précédentes dans lequel les microstructures sont présente sur au moins une couche d'un empilement de films en polymère, de papier ou un mélange des deux.

16. Dispositif l'une quelconque des revendications précédentes, dans lequel les microstructures sont imprimées, gravées, embossées, ou moulées sur au moins une des faces d'un substrat support de sorte à former une structure tridimensionnelle.

17. Dispositif selon l'une quelconque des revendications, dans lequel les microstructures sont formées par-dessus une couche présentant des propriétés optiques sensiblement uniformes, ladite couche pouvant être agencée sur le verso de la surface portant lesdites microstructures où sur l'une quelconque des autres couches dans un empilement de films en polymère et lesdites microstructures étant formées au moins partiellement au-dessus de ladite couche.

18. Dispositif Document de valeur tel un billet de banque, un document officiel, un document d'identité, un emballage comprenant un dispositif selon l'une quelconque des revendications précédentes.

**Patentansprüche**

1. Vorrichtung, die eine Einheit dreidimensionaler Mikrostrukturen umfasst, die mindestens eine optisch reflektierende Fläche besitzen, wobei die dreidimensionalen Mikrostrukturen auf einer Oberfläche gebildet sind, die eine Ebene P definiert, **dadurch gekennzeichnet, dass** die Mikrostrukturen in einer Vielzahl von Teilanordnungen (11, 12, 41, 61, ..., 68) von Mikrostrukturen eingerichtet sind, die mindestens einen planaren azimutalen Winkel θ aufweisen, der zwischen einer Richtung parallel zu mindestens einer reflektierenden Fläche der Mikrostruktur und einer fixen Bezugsachse der Vorrichtung in der Ebene P, identisch, definiert ist, wobei die Mikrostrukturen einer oder mehrerer Teilanordnung(en) einen identischen planaren azimutalen Winkel θ aufweisen, der mindestens einen planaren azimutalen Winkel θ aufweist, der sich von dem von Mikrostrukturen, die andere Teilanordnungen bilden, die in der Vorrichtung vorhanden sind, unterscheidet, so dass mindestens ein transitorisches Bild (25) angezeigt wird, das optische Eigenschaften aufweist, die in Abhängigkeit von dem Beobachtungswinkel variabel sind, **dadurch gekennzeichnet, dass** ein Bild mindestens zwei getrennte Bildzonen umfasst, jeweils eine als erstes, transitorisches Bild (25) bezeichnete Zone, und mindestens eine andere, als latentes Bild bezeichnete Zone (26), in welcher Mikrostrukturen, die Teilanordnungen (11, 12, 41, 61, ..., 68) bilden, nur einer dieser mindestens zwei Bildzonen zugewiesen sind, und **dadurch gekennzeichnet, dass** die planaren azimutalen Winkel θ der Mikrostrukturen in jeder der Zonen (25, 26) eine nichtlineare Abhängigkeit aufweisen, die für jede der Zonen unterschiedlich ist, mit mindestens einer gemeinsamen Richtung s, die allen Bildzonen gemeinsam ist, und **dadurch gekennzeichnet, dass** die nichtlinearen Funktionen θ(s) in jeder der Zonen zu derselben Kurvenfamilie gehören, die durch denselben Wert θ für mindestens einen Wert von s durchgeht.

2. Vorrichtung nach Anspruch 1, **dadurch gekennzeichnet, dass** jede Mikrostruktur ein prismatisches Element ist, das mit dem prismatischen Element identisch oder im Wesentlichen identisch ist, wobei das prismatische Element zwei Flächen aufweist, die einander entgegengesetzt und untereinander nur durch den azimutalen Winkel der Mikrostruktur differenziert sind.

3. Vorrichtung nach einem der Ansprüche 1 oder 2, **dadurch gekennzeichnet, dass** die Mikrostrukturen einer Teilanordnung in Geraden, Kurven, in Form von Linien vom Zickzack-Typ, die geschlossen oder offen sind, oder einer Mischung dieser Anordnungen angeordnet sind.

4. Vorrichtung nach einem der vorstehenden Ansprüche, **dadurch gekennzeichnet, dass** sich eine Basis jeder Mikrostruktur in der Ebene P befindet und eine dreiseitige oder vierseitige Form aufweist, deren Seiten Geraden und/oder Kurven sind.

5. Vorrichtung nach Anspruch 1, wobei die Funktionen θ(s) in jeder der Zonen Arkustangens-Funktionen sind, die beschrieben sind durch:

$$\theta(s) ; s_{st} \leq s \leq s_e \quad (1)$$

$$\theta - \theta_n = B \tan^{-1}[k(s-s_0] \quad (2)$$

wobei:

$s_{st}$ der Anfang des Bereichs der Werte in der Dimension s für sämtliche Zonen und Mikrostrukturen ist
$s_e$ das Ende des Bereichs der Werte in der Dimension s für sämtliche Zonen und Mikrostrukturen ist
und $\theta_0$ und $s_0$ jeweilige Mittelwerte von θ und von s in dem Bereich sind,
und **dadurch gekennzeichnet, dass** der planare azimutale Winkel θ in Abhängigkeit von s der Mikrostrukturen, die in Teilanordnungen gebildet sind, die jeweils jeder Zone zugeordnet sind, für jede Zone unterschiedlich ist, jeweils von unterschiedlichen Variablen B und k definiert ist, so dass:

$$B = \frac{2(\theta_c - \theta_0)}{\pi} \quad (3)$$

und

$$k = \frac{1}{(s_{st}-s_0)} \tan\left[\frac{\theta_{st}-\theta_0}{B}\right] (4)$$

wobei $\alpha_C$ ein asymptotischer Wert von $\theta$ ist, wenn s → ∞ oder s → -∞.

6. Vorrichtung nach den Ansprüchen 1, wobei die Abhängigkeit von $\theta$ auf s durch einen Abschnitt der Arkustangens-Funktion beschrieben ist.

7. Vorrichtung nach den Ansprüchen 1 bis 4, wobei die Teilanordnungen von Mikrostrukturen derart eingerichtet sind, dass n transitorische Bilder angezeigt werden, wobei n eine Ganzzahl größer als 1 ist, wobei die transitorischen Bilder jeweils an unterschiedlichen Beobachtungswinkeln sichtbar sind.

8. Vorrichtung nach einem der vorstehenden Ansprüche, wobei n transitorische Bilder eine Währung darstellen, die die Form mindestens eines alphanumerischen Zeichens, mindestens einer Darstellung, wie eines Portraits oder einer Blume oder jeder anderen Darstellung, mindestens eines Musters oder mindestens eines Symbols oder einer Mischung dieser annehmen kann.

9. Vorrichtung nach Anspruch 8, wobei die n transitorischen Bilder jeweils an unterschiedlichen Beobachtungswinkeln sichtbar sind, und wobei die Form der Mikrostruktur durch mindestens n Flächen gekennzeichnet ist, die voneinander unterschiedliche azimutale Winkel $\theta$ aufweisen, wobei die Anzahl n eine ganzzahligen Anzahl größer als 1 ist.

10. Vorrichtung nach einem der vorstehenden Ansprüche, wobei die Mikrostrukturen und/oder Teilanordnungen derart eingerichtet sind, dass das Bild oder die Bilder dynamisch unter unterschiedlichen Blickwinkeln der Vorrichtung angezeigt wird/werden.

11. Vorrichtung nach einem der vorstehenden Ansprüche, wobei mindestens eine Seite der Flächen der Mikrostruktur eine Länge größer als 30 μm, bevorzugt mindestens 60 μm aufweist.

12. Vorrichtung nach einem der vorstehenden Ansprüche, wobei die Mikrostrukturen oder die Teilanordnungen vollständig oder teilweise durch mindestens eine metallische Schicht oder eine Schicht bedeckt sind, die einen unterschiedlichen Brechungsindex von der aufweist, die die Mikrostrukturen bildet, oder jede andere Schicht, die die optischen Eigenschaften der Mikrostruktur modifiziert.

13. Vorrichtung nach einem der vorstehenden Ansprüche, wobei die Mikrostrukturen auf einem Werkzeug, wie einem flachen oder gekrümmten Druckstock, einer Laminierplatte, einer Matrix aus Nickel, die einen Druckzylinder umhüllen kann, einem Formeinsatz oder einer Form selbst, die das Negativ einer Vorrichtung nach einem der vorstehenden Ansprüche umfasst, gebildet sind.

14. Vorrichtung nach einem der vorstehenden Ansprüche, wobei die Mikrostrukturen auf einem Träger, insbesondere einem Polymerfilm, gebildet sind.

15. Vorrichtung nach einem der vorstehenden Ansprüche, wobei die Mikrostrukturen auf mindestens einer Schicht einer Stapelung von Polymerfilmen, Papier oder einer Mischung beider vorhanden sind.

16. Vorrichtung nach einem der vorstehenden Ansprüche, wobei die Mikrostrukturen auf mindestens eine der Flächen eines Trägersubstrats derart aufgedruckt, graviert, geprägt oder geformt sind, dass sie eine dreidimensionale Struktur bilden.

17. Vorrichtung nach einem der Ansprüche, wobei die Mikrostrukturen über einer Schicht gebildet sind, die im Wesentlichen gleichmäßige optische Eigenschaften aufweist, wobei die Schicht auf der Rückseite der Oberfläche eingerichtet sein kann, die die Mikrostrukturen trägt, oder auf einer der anderen Schichten in einer Stapelung von Polymerfilmen, und wobei die Mikrostrukturen mindestens teilweise über der Schicht gebildet sind.

18. Vorrichtung, Wertpapier, wie ein Geldschein, ein offizielles Dokument, einen Ausweis, eine Verpackung, die eine Vorrichtung nach einem der vorstehenden Ansprüche umfasst.

**Claims**

1. A device comprising a set of three-dimensional microstructures, possessing at least one optically reflective face, said three-dimensional microstructures being formed on a surface defining a plane P, **characterized in that** said microstructures are arranged in a plurality of subsets (11, 12, 41, 61, ..., 68) of microstructures presenting at least one azimuthal planar angle θ, defined between a direction parallel to at least one reflective face of said microstructure and a fixed reference axis of the device in the plane P, which is identical, said microstructures of one or more subset(s) having an identical azimuthal planar angle θ presenting at least one azimuthal planar angle θ different from that of microstructures which are constitutive of other subsets present in said device, so as to display at least one transitory image (25) having optical properties which vary depending on the angle of observation, **characterized in that** an image comprises at least two distinct image zones, respectively a first zone designated as transient image zone (25) and at least one other zone designated as latent image zone (26), in which microstructures constitutive of subsets (11, 12, 41, 61, ...,68) are solely assigned to one of these at least two image zones, and **characterized in that** the azimuthal planar angles θ of the microstructures in each of said zones (25, 26) present a non-linear dependence, different for each of said zones, on at least one direction s common to all the image zones and **characterized in that** non-linear functions θ(s) in each of said zones form part of the same family of curves passing through the same value θ for at least one value of s.

2. The device according to Claim 1, **characterized in that** each microstructure is a prismatic element, identical or substantially identical, said prismatic element having two opposite faces, and differentiated with respect to one another solely by the azimuthal angle of said microstructure.

3. The device according to one of Claims 1 or 2, **characterized in that** the microstructures of a said subset are arranged in straight lines, curves, in the form of lines of zigzag type, closed or open, or a mixture of these arrangements.

4. The device according to one of the preceding claims, **characterized in that** a base of each microstructure is located in the plane P and is of trilateral or quadrilateral shape, the sides of which are straight and/or curved.

5. The device according to Claim 1 where the said functions θ(s) in each of said zones are arc tangent functions described by:

$$\theta(s); s_{st} \leq s \leq s_e \quad (1)$$

$$\theta - \theta_0 = B \tan^{-1}\left[k(s - s_0)\right] \quad (2)$$

where:

$s_{st}$ is the start of the range of the values in the dimension s for the whole of said zones and microstructures,
$s_e$ is the end of the range of the values in the dimension s for the whole of the said zones and microstructures,
and $\theta_0$ and $s_0$ are the respective median values of θ and of s in the said range,
and **characterized in that** the azimuthal planar angle θ as a function of s of the microstructures constituted in subset arrangement, associated with each of the zones respectively, is different for each zone, and defined by different variables B and k such that:

$$B = \frac{2(\theta_c - \theta_0)}{\pi} \quad (3)$$

and

$$k = \frac{1}{(s_{st} - s_0)} \tan\left[\frac{\theta_{st} - \theta_0}{B}\right] \quad (4)$$

where $a_c$ is an asymptotic value of θ when $s \to \infty$ or $s \to -\infty$.

6. The device according to Claim 1, in which the dependence of θ on s is described by a portion of said arc tangent function.

7. The device according to Claims 1 to 4, in which said subsets of microstructures are arranged so as to display n transitory images, *n* being a whole number greater than 1, said transitory images each being respectively visible at different observation angles.

8. The device according to any one of the preceding claims, in which *n* transitory images represent a motto being able to cover the form of at least one alphanumeric character, of at least one representation such as a portrait or a flower or any other representation, of at least one motif or of at least one symbol or a mixture of these.

9. The device according to Claim 8, in which the *n* transitory images are each respectively visible at different observation angles and in which the form of the microstructures is **characterized by** at least *n* faces having different azimuthal angles θ different from one another, the number n being a whole number greater than 1.

10. The device according to any one of the preceding claims, in which the microstructures and/or said subsets are arranged so as to display the image or the images in a dynamic manner under different viewing angles of the device.

11. The device according to any one of the preceding claims, in which at least one side of the faces of said microstructure presents a length greater than 30 μm, preferably of at least 60 μm.

12. The device according to any one of the preceding claims, in which said microstructures or the subsets are covered entirely or partially by at least one metallic layer or a layer having a refractive index different from that composing the said microstructures or any other layer modifying the optical properties of the microstructure.

13. The device according to any one of the preceding claims, in which the microstructures are formed on a tool such as flat or curved cliché, a lamination plate, a nickel matrix being able to envelope a printing cylinder, a forming mould insert or the mould itself, including the negative of a device according to any one of the preceding claims.

14. The device according to any one of the preceding claims, in which the microstructures are formed on a support, in particular a polymer film.

15. The device according to any one of the preceding claims, in which the microstructures are present on at least one layer of a stack of polymer films, of paper or a mixture of the two.

16. The device according to any one of the preceding claims, in which the microstructures are printed, etched, embossed, or moulded on at least one of the faces of a support substrate so as to form a three-dimensional structure.

17. The device according to any one of the claims, in which the microstructures are formed above a layer having substantially uniform optical properties, said layer being able to be arranged on the reverse of the surface carrying the said microstructures or on any one of the other layers in a stack of polymer films and said microstructures being formed at least partially above the said layer.

18. A security document such as a bank note, an official document, an identity document, a packaging including a device according to any one of the preceding claims.

**Fig. 1**

**Fig. 2**

**Fig. 3**

**Fig. 6B**

**Fig. 4**

**Fig. 5A**

**Fig. 5B**

**Fig. 5C**

**Fig. 6A**

**EP 3 899 605 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5059245 A
- WO 1993000224 A
- WO 2015150052 A
- EP 1966769 A
- DE  102010047250
- EP 1966769 A1
- DE 102010047250 A1
- WO 2016177470 A1